# EUROPÄISCHE PATENTSCHRIFT

(11) **EP 1 318 958 B1**
(45) Veröffentlichungstag und Bekanntmachung des Hinweises auf die Patenterteilung: **24.05.2006**
(21) Anmeldenummer: 01982243.6
(22) Anmeldetag: 05.09.2001
(51) Int. Cl.: B65G 47/88, B65G 47/32, B65G 47/08

(54) **VERFAHREN UND VORRICHTUNG ZUR ZUFÜHRUNG VON REGELMÄSSIGEN GEGENSTÄNDEN ZU EINER ARBEITSSTATION**
METHOD AND DEVICE FOR SUPPLYING REGULARLY OBJECTS TO A WORK STATION
PROCEDE ET DISPOSITIF D'APPORT D'OBJETS REGULIERS A UNE STATION DE TRAVAIL

(30) Priorität: 18.09.2000 US 233418 P; 08.12.2000 DE 10061063
(43) Veröffentlichungstag der Anmeldung: 18.06.2003
(73) Patentinhaber: LTS LOHMANN Therapie-Systeme AG, 56626 Andernach (DE)
(72) Erfinder: SCHÄFER, Wolfgang, Ledgewood, NJ 08752 (US)
(74) Vertreter: Flaccus, Rolf-Dieter
(86) Internationale Anmeldenummer: PCT/EP2001/010194
(87) Internationale Veröffentlichungsnummer: WO 2002/024556

(56) Entgegenhaltungen:
- EP-A- 0 519 400
- DE-A- 2 511 781
- US-A- 1 961 697
- US-A- 4 519 492

## Beschreibung

Die Erfindung betrifft ein Verfahren und eine Vorrichtung zur Zuführung von regelmäßigen Gegenständen, insbesondere von Behälterteilen, zu einer Arbeitsstation, die an zwei gegenüberliegenden Seiten vorstehende Griffelemente aufweisen.

Regelmäßige Behälterteile können an zwei gegenüberliegenden Seiten mit vorstehenden Griffelementen versehen sein, um eine erleichterte Handhabung der Behälter beim Öffnen und / oder Schließen sicherzustellen, wobei die gegenüberliegenden Seiten im wesentlichen parallel zur Längsachse des Behälters verlaufen. Beim Zuführen der Behälterteile zu einer Arbeitsstation, insbesondere zu einer Verpackungsmaschine, müssen diese eine vorbestimmte Position haben. Sind die Behälterteile in die Verpackungsmaschine in ihrer Längsrichtung einzuführen und zu verarbeiten, ist deren Zuführung unmittelbar vor der Verpackungsmaschine ebenfalls in Längsrichtung vorzusehen. Die Behälterteile werden dabei aneinanderliegend herangeführt, vor der Einführung in die Verpackungsmaschine vereinzelt und die dem vereinzelten Behälterteil nachfolgenden Behälterteile werden angestaut. Werden diese nun, wie vorbestimmt, in Längsrichtung auf einer Transportbahn aneinanderliegend herangeführt und zum Zwecke des Vereinzelns notwendigerweise auf dieser angestaut; kann es zu Verschiebungen und Verklemmungen auf der Transportbahn kommen, da die Behälterteile mit ihrer Schmalseite aneinanderliegen und sich nur wenig gegeneinander abstützen können. Sind die Behälterteile an einer Schmalseite sogar angeschrägt, kann es zum Übereinanderschieben von Behälterteilen kommen, wodurch die Zuführung zur Verpackungsmaschine gestört ist und unterbrochen werden muß.

Daher ist es vorteilhaft, die Behälterteile mit ihrer Längsrichtung quer zur Transportbahn zuzuführen und zum Zwecke der Vereinzelung und Einführung in die Verpackungsmaschine im Takt anzustauen, so daß sich die Behälterteile besser gegeneinander abstützen können und Verklemmungen oder Überschiebungen weitgehend vermieden werden. Beim Stauen können sich jedoch die gegeneinandergerichteten Griffelemente der aneinanderliegenden Behälterteile ineinander verhaken. Für die Heranführung derselben ist das nicht von Bedeutung, wohl aber für die Vereinzelung und Einführung in die Verpackungsmaschine. Ein seitliches Wegführen des vorderen Behälterteils ist nicht möglich, da dessen Griffelemente mit denen des nachfolgenden Behälterteils verhakt sind.

EP-A-0 519 400 offenbart eine Vorrichtung, mittels welcher Gegenstände, die in zufälliger Anordnung nacheinander herangeführt werden, in einer regelmäßigen Anordnung mit gleichen Abständen zueinander weitertransportiert werden können. Die Vorrichtung umfaßt eine Transportbahn zum Heranführen von Gegenständen, wobei am Ende der Transportbahn eine Vereinzelungseinrichtung für den jeweils vorderen Gegenstand und eine Aufnahmevorrichtung für diesen angeordnet ist; sie umfaßt ferner eine Zuführeinrichtung zum Zuführen eines vereinzelten Gegenstandes zu einer Arbeitsstation. Die Vereinzelungseinrichtung umfaßt eine Verzögerungseinrichtung, durch welche die in zufälliger Anordung herangeführten Gegenstände in einer geordneten Reihe angeordnet werden, um das Vereinzeln zu ermöglichen.

Aufgabe der Erfindung war es, ein Verfahren zur Zuführung von regelmäßigen Gegenständen, insbesondere Behälterteilen, zu einer Arbeitsstation nach dem Oberbegriff des Anspruchs 1 zu schaffen, bei dem die Gegenstände in stabiler Lage aneinanderliegend herangeführt und in Längsrichtung der Arbeitsstation einzeln und unbeeinträchtigt zugeführt werden, und eine Vorrichtung zur Durchführung des Verfahrens anzugeben.

Die Aufgabe wird bei einem Verfahren nach dem Oberbegriff des Anspruchs 1 durch dessen kennzeichnende Merkmale und mit einer Vorrichtung mit den Merkmalen des Anspruchs 6 gelöst. Vorteilhafte Ausgestaltungen sind jeweils in nach folgenden Unteransprüchen aufgeführt.

Das erfindungsgemäße Verfahren ist demnach dadurch gekennzeichnet, daß die genannten Gegenstände mit den gegenüberliegenden Seiten quer zur Transportrichtung und mit ineinandergreifenden Griffelementen herangeführt werden, daß die Vereinzelung durch Zurückschieben des folgenden Gegenstandes entgegen dem durch die nachfolgenden Gegenstände verursachten Staudruck auf der Transportbahn im Arbeitstakt erfolgt, und daß danach der vereinzelte Gegenstand quer zur Transportbahn weggeführt und mit den gegenüberliegenden Seiten entlang einer Führungsbahn der Arbeitsstation zugeführt wird.

Die erfindungsgemäße Vorrichtung ist demnach dadurch gekennzeichnet, daß die Vereinzelungseinrichtung Mittel zum Zurückschieben eines Gegenstands auf der Transportbahn im Arbeitstakt und entgegen dem durch die nachfolgenden Gegenstände verursachten Staudruck aufweist; und daß die Aufnahmevorrichtung mit zumindest einer Aufnahme für einen vereinzelten Gegenstand versehen ist, die am Ende der Transportbahn quer zur dieser bewegbar ist, wobei die Aufnahmevorrichtung zugleich Bestandteil der Zuführeinrichtung ist.

Die Erfindung besteht darin, daß bei der Zuführung von regelmäßigen Gegenständen mit an zwei gegenüberliegenden Seiten angeordneten Griffelementen zu einer Arbeitsstation, bei der die aufeinanderfolgen Gegenstände aneinanderliegend auf einer ununterbrochen bewegten Transportbahn herangeführt, nacheinander vereinzelt und einzeln und im Arbeitstakt der Arbeitsstation zugeführt werden, die Gegenstände mit den gegenüberliegenden Seiten quer zur Transportrichtung und mit einander zugewandten und verhakten Griffelementen herangeführt werden, der jeweils vordere Gegenstand im Arbeitstakt durch Zurückschieben des folgenden Gegenstandes entgegen dem durch die nachfolgenden Gegenstände verursachten Staudruck auf der Transportbahn vereinzelt und quer zur Transportbahn weggeführt und auf einer Führungsbahn der Arbeitsstation zugeführt wird, wobei die Seiten mit den Griffelementen parallel zur Zuführrichtung ausgerichtet sind. Damit werden die Gegenstände in einer stabilen Lage mit verhakten Griffelementen auf der Transportbahn herangeführt und unbeeinträchtigt durch die anderen auf der Transportbahn herangeführten Gegenstände vereinzelt und einzeln und im Arbeitstakt in ihrer Längsrichtung der Arbeitsstation zugeführt.

Dabei kann die Zurückhaltung des jeweils folgenden Gegenstandes bei der Vereinzelung mit einer Bewegung dieses Gegenstandes und damit zwangsläufig auch der diesem nachfolgenden Gegenstände entgegen deren Transportrichtung verbunden sein, vorzugsweise um wesentlich mehr als die Breite der Griffelementprojektion auf die Behältergrundebene, um die Sicherheit des Vereinzelungsvorganges zu erhöhen.

Der zu vereinzelnde Gegenstand kann durch den Staudruck auf eine am Ende der Transportbahn angeordnete Gleitfläche geschoben und dabei vereinzelt, und danach von der Gleitfläche weggeführt werden, damit die Lage des Gegenstandes nach der Vereinzelung stabil bleibt und nicht durch die Bewegung der Transportbahn beeinträchtigt wird.

Die Führungsbahn ist in bevorzugter Verfahrensdurchführung eine Gleitbahn, auf der die Gegenstände fremdbewegt werden, wobei die Gleitbahn in Abhängigkeit von der räumlichen Zuordnung der Arbeitsstation auch einen Kurvenabschnitt aufweisen kann. Von der Führungsbahn, bevorzugt eine Gleitbahn, gelangen die Gegenstände selbsttätig in die Arbeitsstation.

Die Vorrichtung zur Durchführung des Verfahrens weist ein Transportband zum Heranführen der Gegenstände auf. Am Ende des Transportbandes sind eine Vereinzelungseinrichtung und eine Aufnahmevorrichtung für den vereinzelten Gegenstand angeordnet, wobei die Vereinzelungseinrichtung den jeweils zweiten Gegenstand, in Richtung des heranführenden Transportbandes, zurückschiebt, nachdem das erste Teil durch den Staudruck des Transportbandes in die Aufnahmevorrichtung gelangt ist. Dabei ist die Aufnahmevorrichtung zugleich Bestandteil einer Einrichtung zum Zuführen des Gegenstandes zur Arbeitsstation.

Die Vorrichtung weist bevorzugt mechanische Rückschiebevorrichtungen auf, um nichtmetallische Gegenstände vereinzeln zu können.

Die Rückschiebe- oder Rückdrückmittel sind vorteilhaft mit einem Kurzhub-Mechanismus verbunden, der Bestandteil der Vereinzelungseinrichtung ist und der auch eine Bewegung der Behälterteile entgegen der Transportrichtung der Gegenstände (der Förderrichtung des Transportbandes) ermöglicht.

Die am Ende der Transportbahn angeordnete Aufnahmevorrichtung ist mit einer Aufnahme für den vereinzelten Gegenstand versehen, die quer zur Transportbahn bewegbar ist. Bevorzugt ist diese ein über einer ortsfesten Gleitfläche angeordneter Drehteller, an dessen Rand mehrere Ausnehmungen im gleichen Abstand als Aufnahmen für jeweils einen Gegenstand ausgebildet sind. Der Drehteller wird im Arbeitstakt in der Zuführrichtung gedreht, derart, daß zum Zeitpunkt der Vereinzelung eine Aufnahme am Ende des Transportbandes positioniert ist. Die Gleitfläche ist mit einer Führungswandung versehen, die im geringen Abstand zum Rand des Drehtellers im Bereich zwischen dem Transportband und der Arbeitsstation senkrecht nach oben stehend an der Gleitfläche angeordnet ist und die die Aufnahme bei der Zuführung zur Arbeitsstation gleichsam verschließt und den Gegenstand bei der Drehbewegung des Drehtellers in dieser hält. Mit der Führungswandung ist es möglich, den Gegenstand in einem beliebigen Winkel gegenüber dem Transportband der Arbeitsstation zuzuführen. Bevorzugt ist die Führungswandung jedoch in einem Winkelbereich von 90 Grad ausgebildet, so daß der quer vom Transportband weggeführte Gegenstand in seiner Längsachse parallel zum Transportband geführt und in dieser in die Arbeitsstation eingeführt wird.

Die Gleitfläche, auf der die Gegenstände durch den Drehteller geführt bewegt werden, endet an einer Rutsche oder weist eine Öffnung für die Gegenstände auf, durch die diese auf die Rutsche gelangen, die die Gegenstände übernimmt und die an ihrem unteren Ende mit einer an der Arbeitsstation angeordneten Aufnahmeeinrichtung fluchtend angeordnet ist. Mit der Übergabe des Gegenstandes an die Rutsche ist der an den Arbeitstakt der Arbeitsstation angepaßte Drehtakt des Drehtellers beendet. Die Ausnehmungen im Drehteller sind so im Abstand angeordnet, daß bei Beendigung des Drehtaktes eine weitere Ausnehmung am Ende des Transportbandes zur Aufnahme des nächsten vereinzelten Gegenstandes positioniert ist.

Am arbeitsstationsseitigen Ende der Rutsche kann eine betätigbare Rückhaltevorrichtung für den Gegenstand angeordnet sein, die den Gegenstand so lange zurückhält, bis die Aufnahmeeinrichtung an der Arbeitsstation mit dem Ende der Rutsche korrespondiert. Damit kann die taktgenaue Zuführung der Gegenstände aus einer Warteposition heraus mit extrem kurzer Zuführzeit erfolgen.

Durch die vorstehend beschriebene Vorrichtung werden die Gegenstände mechanisch nicht beansprucht. Toleranzabweichungen bei den Abmessungen der Gegenstände sind nicht kritisch.

Die Erfindung wird nachstehend anhand eines Ausführungsbeispiels erläutert. In den zugehörigen Zeichnungen zeigen:
- Fig. 1a bis 1d:: eine Vorrichtung zur Zuführung von regelmäßigen Gegenständen zu einer Arbeitsstation in mehreren Arbeitsphasen in einer Draufsicht, schematisch, und
- Fig. 2a,b:: eine zugehörige Vereinzelungseinrichtung, schematisch als Schnittzeichnung dargestellt.

In den Fig. 1a bis 1d ist eine ein Transportband 1, eine Vereinzelungseinrichtung 2, eine Aufnahmevorrichtung 3 und eine Zuführeinrichtung 4 aufweisende Vorrichtung zur Zuführung von regelmäßigen Gegenständen G (Behälterteile) zu einer nicht dargestellten Verpackungsmaschine gezeigt. Die Aufnahmevorrichtung 3 ist dabei Bestandteil der Zuführeinrichtung 4. Am Ende der Zuführeinrichtung 4 ist eine Rutsche 5 zur Übernahme und Weiterleitung der Gegenstände G an die Arbeitsstation angeordnet. Die Aufnahmevorrichtung 3 ist aus einem über einer ortsfesten Gleitfläche 6 mit dem gleichen Höhenniveau wie das Transportband 1 und einem über dieser angeordneten Drehteller 7 gebildet, an dessen Rand z. B. 4, 8 oder mehr Ausnehmungen 8 im gleichen Abstand - der Winkelabstand der radialen Mittellinie der Ausnehmung richtet sich nach der gewählten Teilung auf dem Drehteller - für jeweils einen Gegenstand G ausgebildet sind. Die Gleitfläche 6 ist mit einer senkrecht an dieser hochstehenden Führungswandung 9 versehen, die den Rand des Drehtellers 7 im Bereich zwischen dem Transportband 1 und der Rutsche 5 im geringen Abstand umgibt, wobei die Führungswandung 9 in der gezeigten Draufsicht die Gestalt eines Kreisringausschnittes von im wesentlichen 90 Grad hat. Die Gleitfläche 6 grenzt verpackungsmaschinenseitig an die Rutsche 5, die eine Abwärtsneigung von etwa 30 bis 60 Grad hat.

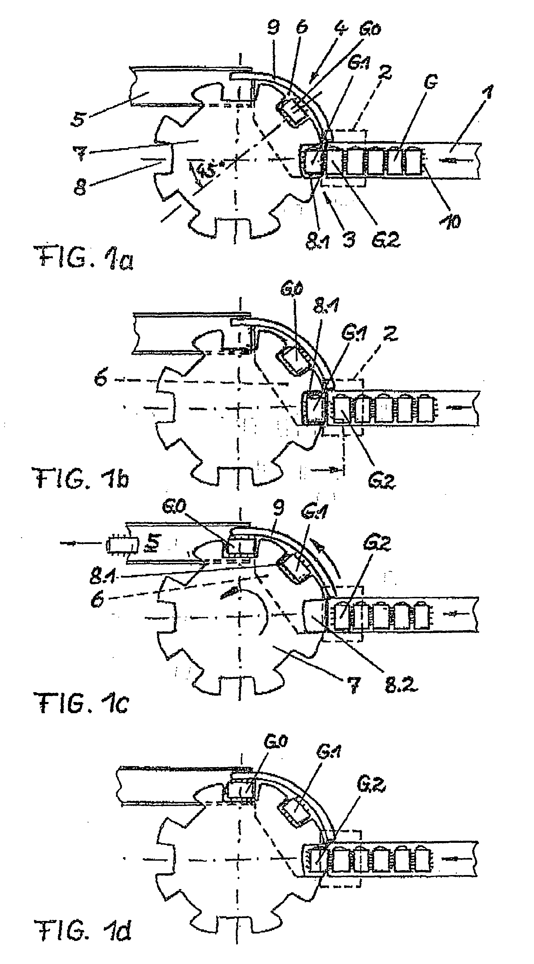

Fig. 1a zeigt den Drehteller in einer Stillstandsphase und -position, in der eine Ausnehmung 8.1 am Ende des Transportbandes 1 positioniert ist. Die auf diesem herangeführten aneinanderliegenden Behälterteile G weisen an den quer zur Transportrichtung gegenüberliegenden Seiten Griffelemente 10 auf, die jeweils mit den Griffelementen 10 eines voran- und eines nachgeförderten Behälterteils G in Eingriff stehen. Diese Behälterteile G haben das vordere Behälterteil G.1 durch den Staudruck der nachfolgenden Behälterteile G vom Transportband 1 herunter- und auf die Gleitfläche 6 geschoben. In dieser Position wird das Behälterteil G.1 durch die Vereinzelungseinrichtung 2 von den nachfolgenden Behälterteilen abgetrennt und außer Eingriff mit dem zweiten Behälterteil G.2 gebracht, indem dieses (G.2) durch von unten in das Behälterteil G.2 eingreifende Schubstößel, die Bestandteile eines Kurzhub-Mechanismus sind, auf dem laufenden Transportband 1 um das Doppelte der Breite der Griffelementprojektion auf die Behälterteilgrundebene zurückgesetzt und in der zurückgesetzten Position gehalten wird. Damit ist das Behälterteil G.1 vereinzelt. Diese Phase ist in Fig. 1b gezeigt. Anschließend wird der Drehteller um 45 Grad oder entsprechend der gewählten Teilung gedreht, bis die nächste Ausnehmung 8.2 am Ende des Transportbandes 1 positioniert ist. Dabei wird das Behälterteil G.1 quer zur Förderrichtung des Transportbandes weggeführt und anschließend entlang der Führungswandung 9 bewegt und dabei durch diese in der Ausnehmung 8.1 gehalten.
Fig. 1c zeigt die erreichte nächste Stillstandsposition. Der Kurzhub-Mechanismus hält während der Drehphase des Drehtellers 6 die Behälterteile G.2 und G noch auf dem Transportband 1 zurück und verhindert, daß das Behälterteil G.2 auf den Drehteller 6 zu geschoben wird.

Nach der Positionierung der Ausnehmung 8.2 gibt der Kurzhub-Mechanismus durch Zurückziehen der Schubstößel und Vorfahren derselben in die Eingriffposition die Behälterteile G frei. Das Behälterteil G.2 wird in die Ausnehmung 8.2 geschoben. Es folgt wieder ein oben beschriebener vereinzelungsvorgang.

In den Fig. 1b und 1c ist auch gezeigt, wie ein dem Behälterteil G.1 vorausgefördertes Behälterteil G.0 weitergeführt wird. In Fig. 1b befindet sich dieses (G.O) um 45 Grad vor dem Behälterteil G.1 in Ruheposition und ist gegenüber seiner Wegführposition am Transportband 1 um 45 Grad gedreht, während das Behälterteil G.1 vereinzelt wird. Bei der anschließenden Drehung des Drehtellers 6 um 45 Grad (Endstellung in Fig. 1c gezeigt), wird das Behälterteil G.0 um weitere 45 Grad befördert, dabei auch um weitere 45 Grad gedreht, und in seiner Längsrichtung auf die Rutsche 5 geführt, die in der Draufsicht parallel zum Transportband 1 angeordnet ist, und gelangt über diese in die Verpackungsmaschine. Auf dieses (G.O) folgt danach das Behälterteil G.1.

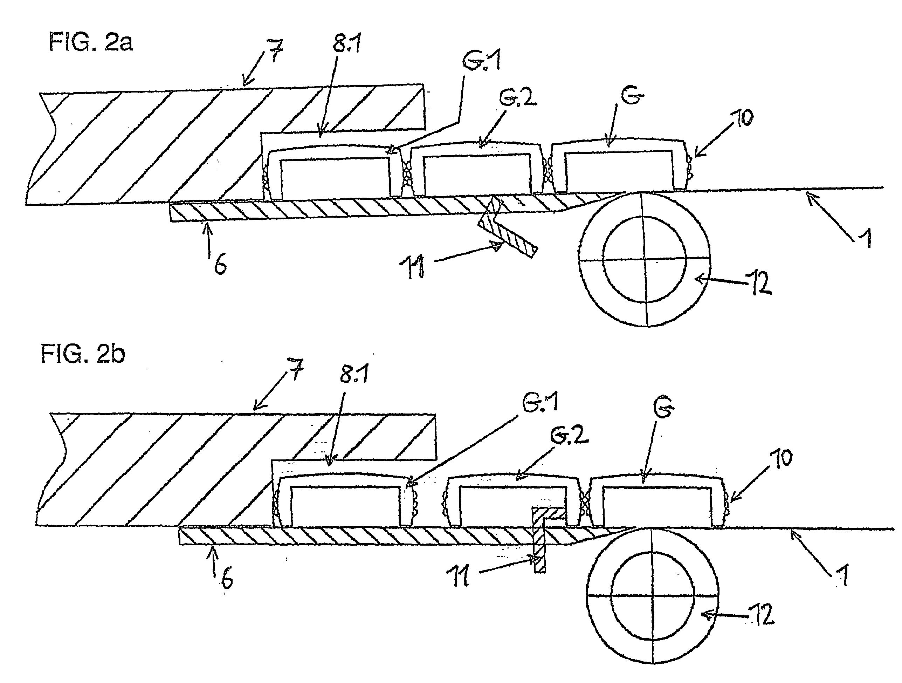

In FIG. 2 ist eine zugehörige Vereinzelungseinrichtung schematisch als Schnittzeichnung dargestellt.
Die Bezugszeichen haben dieselbe Bedeutung wie in den FIG. 1a-d. (12) bezeichnet eine Transportrolle zur Bewegung des Transportbands (1). Mit (11) ist eine Rückschiebevorrichtung (ein Rückschiebemittel oder Rückdrückmittel, z. B. Schubstößel) bezeichnet.
FIG. 2a zeigt die Vereinzelungseinrichtung während der Stillstandsphase, entsprechend Fig. 1a. Das vordere Behälterteil G.1 wurde vom Transportband 1 auf die Gleitfläche 6 und schließlich in die Ausnehmung 8.1 des Drehtellers 7 geschoben.
Die Rückschiebevorrichtung 11 befindet sich während dieser Phase in einer unteren oder Ausgangsposition, wobei sie unterhalb des nachfolgenden Behälterteils G.2 positioniert ist, dieses aber nicht berührt.
FIG. 2b zeigt einen Zustand, der dem in FIG. 1b gezeigten Zustand entspricht. Von unten in das Behälterteil G.2 eingreifende Schubstößel 11, die Bestandteile eines Kurzhub-Mechanismus sind, schieben das Behälterteil G.2 entgegen der Förderrichtung des Transportbandes zurück, wie oben zu FIG. 1a/b beschrieben. Dabei wird das Behälterteil G.1 von dem nachfolgenden Behälterteil G.2 abgetrennt und vereinzelt. Anschließend wird der Drehteller mit dem in der Ausnehmung 8.1 befindlichen, abgetrennten Behälterteil G.1 auf die angegebene Weise weitergedreht. Das nächste Behälterteil G.2 wird durch die genannten Schubstößel 11 in der zurückgesetzten Position gehalten, bis die nächste Ausnehmung 8.2 am Ende des Transportbandes 1 positioniert ist. Ist dies der Fall, werden die Schubstößel in ihre untere Ausgangslage zurückbewegt, wodurch das Behälterteil G.2 freigegeben wird und in die Ausnehmung 8.2 geschoben wird.

Die Vorrichtung kann sowohl elektronisch als auch mechanisch gesteuert werden, wobei eine taktgenaue Abstimmung der Vereinzelung, der Bewegung des Drehtellers und der Behälterteilzuführung in die Verpackungsmaschine erfolgt. Eine Überwachung der Zuführeinrichtung ist nicht erforderlich, der Zufluß der verpackungsteile, vom Transportband kommend, sollte aus der vorgeschalteten Vorrichtung sichergestellt sein.
Die Steuerungseinrichtung ist nicht Gegenstand der vorstehend beschriebenen Lösung.

### Liste der verwendeten Bezugszeichen

- 1: Transportband
- 2: Vereinzelungseinrichtung
- 3: Aufnahmevorrichtung
- 4: Zuführvorrichtung
- 5: Rutsche
- 6: Gleitfläche
- 7: Drehteller
- 8: Ausnehmung
- 8.1: Ausnehmung
- 8.2: Ausnehmung
- 9: Führungswandung
- 10: Griffelement
- 11: Rückschiebevorrichtung
- 12: Transportrolle
- G: Behälterteil
- G.0: Behälterteil
- G.1: Behälterteil
- G.2: Behälterteil

## Patentansprüche

1. Verfahren zur Zuführung von regelmäßigen Gegenständen mit an zwei gegenüberliegenden Seiten angeordneten Griffelementen (10) zu einer Arbeitsstation, bei dem die aufeinanderfolgenden Gegenstände aneinanderliegend auf einer bewegten Transportbahn (1) herangeführt, nacheinander vereinzelt und einzeln und im Arbeitstakt der Arbeitsstation zugeführt werden, **dadurch gekennzeichnet, daß** die Gegenstände (G, G.O, G.1, G.2) mit den gegenüberliegenden Seiten quer zur Transportrichtung und mit ineinandergreifenden Griffelementen (10) herangeführt werden, daß die Vereinzelung durch Zurückschieben des folgenden Gegenstandes (G.2) entgegen dem durch die nachfolgenden Gegenstände (G) verursachten Staudruck auf der Transportbahn (1) im Arbeitstakt erfolgt, und daß danach der vereinzelte Gegenstand (G.1) quer zur Transportbahn (1) weggeführt und mit den gegenüberliegenden Seiten entlang einer Führungsbahn der Arbeitsstation zugeführt wird.

2. Verfahren nach Anspruch 1, **dadurch gekennzeichnet, daß** die Vereinzelung durch eine Bewegung des folgenden Gegenstandes (G.2) und damit der diesem nachfolgenden Gegenstände (G) um wesentlich mehr als die Breite der Griffelementprojektion entgegen der Transportrichtung auf der Transportbahn (1) erfolgt.

3. Verfahren nach Anspruch 1, **dadurch gekennzeichnet, daß** die Gegenstände (G) vor der Vereinzelung am Ende der Transportbahn (1) auf eine Gleitfläche (6) geschoben und nach der Vereinzelung von dieser (6) oder auf dieser (6) weggeführt werden.

4. Verfahren nach Anspruch 1 oder 3, **dadurch gekennzeichnet, daß** die Fortführung der vereinzelten Gegenstände auf einer zu einem mit entsprechenden Ausnehmungen (8) versehenen Drehteller (7) benachbarten Gleitbahn (6) fremdbewegt erfolgt.

5. Verfahren nach Anspruch 1 oder 3, **dadurch gekennzeichnet, daß** die Gegenstände (G, G.O, G.1, G.2) von der Gleitfläche (6) selbsttätig in die Arbeitsstation gelangen.

6. Vorrichtung zur Durchführung des Verfahrens nach Anspruch 1, mit einer Transportbahn (1) zum Heranführen von Gegenständen (G, G.O, G.1, G.2), wobei am Ende der Transportbahn eine Vereinzelungseinrichtung (2) für den jeweils vorderen Gegenstand (G.1) und eine Aufnahmevorrichtung (3) für diesen angeordnet sind, sowie mit einer Zuführeinrichtung (4) zum Zuführen des Gegenstandes (G, G.O, G.1, G.2) zu einer Arbeitsstation, **dadurch gekennzeichnet, daß** die Vereinzelungseinrichtung Mittel zum Zurückschieben eines Gegenstands (G2) auf der Transportbahn im Arbeitstakt und entgegen dem durch die nachfolgenden Gegenstände (G) verursachten Staudruck aufweist; und daß die Aufnahmevorrichtung (3) mit zumindest einer Aufnahme (8.1, 8.2) für einen vereinzelten Gegenstand (G.1, G.2) versehen ist, die am Ende der Transportbahn quer zur dieser bewegbar ist, wobei die Aufnahmevorrichtung (3) zugleich Bestandteil der Zuführeinrichtung (4) ist.

7. Vorrichtung nach Anspruch 6, **dadurch gekennzeichnet, daß** die Vereinzelungseinrichtung (2) mechanische Rückschiebevorrichtungen (11) für den jeweils zweiten Gegenstand (G.2) aufweist, vorzugsweise von unten in den zweiten Gegenstand eingreifende Schubstößel.

8. Vorrichtung nach Anspruch 7, **dadurch gekennzeichnet, daß** die Rückschiebevorrichtungen (11) Bestandteil eines Kurzhub-Mechanismus mit einer Bewegungskomponente entgegen der Transportrichtung der Gegenstände (G.2, G) sind.

9. Vorrichtung nach Anspruch 6 oder 8, **dadurch gekennzeichnet, daß** die Aufnahmevorrichtung (3) ein über einer ortsfesten Gleitfläche (6) angeordneter Drehteller (7) ist, an dessen Rand mehrere Ausnehmungen (8, 8.1, 8.2) im gleichen Abstand als Aufnahmen für jeweils einen Gegenstand (G, G.O, G.1, G.2) ausgebildet sind, wobei die Gleitfläche (6) mit einer senkrecht an dieser angeordneten Führungswandung (9) versehen ist, die den Rand des Drehtellers (6) im Bereich zwischen dem Transportband (1) und der Arbeitsstation im geringen Abstand umgibt.

10. Vorrichtung nach Anspruch 9, **dadurch gekennzeichnet, daß** die Gleitfläche (6) an einer Rutsche (5) endet, an deren unteren Ende eine an der Arbeitsstation ausgebildete Aufnahmeeinrichtung positionierbar ist.

11. Vorrichtung nach Anspruch 10, **dadurch gekennzeichnet, daß** am Ende der Rutsche (5) eine im Arbeitstakt betätigbare Rückhaltevorrichtung für den Gegenstand (G, G.O, G.1, G.2) angeordnet ist, die diesen freigibt, sobald die Aufnahmeeinrichtung mit der Rutsche (5) korrespondiert.

## Claims

1. A method by means of which regular articles with handle elements (10) arranged on two opposite sides are fed to an operating station, in the case of which the successive articles are advanced up in abutment against one another on a moving transporting path (1), separated one after the other and fed individually, and in time with the operating cycle, to the operating station, **characterized in that** the articles (G, G.O, G.1, G.2) are advanced up with the opposite sides transverse to the transporting direction and with the handle elements (10) interengaging, **in that** the separation takes place by virtue of the following article (G.2) being pushed back counter to the build-up pressure, caused by the following articles (G), on the transporting path (1), in time with the operating cycle, and **in that**, thereafter, the separated article (G.1) is guided away transversely to the transporting path (1) and fed to the operating station with the opposite sides along a guide path of the operating station.

2. The method as claimed in claim 1, **characterized in that** the separation takes place by virtue of the following article (G.2), and thus the articles (G) following the latter, moving counter to the transporting direction on the transporting path (1) by considerably more than the width of the handle-element projection.

3. The method as claimed in claim 1, **characterized in that** the articles (G), prior to the separation, at the end of the transporting path (1), are pushed onto a sliding surface (6) and, following the separation, are guided away by said sliding surface (6) or on the same (6).

4. The method as claimed in claim 1 or 3, **characterized in that** the guiding away of the separated articles takes place on a sliding surface (6) which is adjacent to a turntable (7) provided with corresponding recesses (8), said articles being moved by external means.

5. The method as claimed in claim 1 or 3, **characterized in that** the articles (G, G.O, G.1, G.2) pass automatically from the sliding surface (6) into the operating station.

6. An apparatus for implementing the method according to claim 1, having a transporting belt (1) for advancing articles (G, G.O, G.1, G.2), wherein a separating arrangement (2) for the respectively front article (G.1) and a device (3) for receiving said article is arranged at the end of the transporting belt, and having a feed arrangement (4) for feeding the article (G, G.O, G.1, G.2) to an operating station, **characterized in that** the separating arrangement has means for pushing back an article (G2) on the transporting path, in time with the operating cycle and counter to the build-up pressure caused by the following articles (6); and that the receiving device (3) is provided with at least one receiving means (8.1, 8.2) for a separated article (G.1, G.2), it being possible for said receiving means to be moved transversely to the transporting belt at the end of said transporting belt, the receiving device (3) at the same time forming a constituent part of the feed arrangement (4).

7. The apparatus as claimed in claim 6, **characterized in that** the separating arrangement (2) has mechanical pushing-back devices (11) for the respectively second article (G.2), preferably push rods which engage in the second article from beneath.

8. The apparatus as claimed in claim 7, **characterized in that** the pushing-back devices (11) are a constituent part of a short-stroke mechanism with a movement component counter to the transporting direction of the articles (G.2, G).

9. The apparatus as claimed in claim 6 or 8, **characterized in that** the receiving device (3) is a turntable (7) which is arranged above a stationary sliding surface (6) and on the edge of which a plurality of recesses (8, 8.1, 8.2) are formed at equal spacings as receiving means for in each case one article (G, G.O, G.1, G.2), the sliding surface (6) being provided with a guide wall (9) which is arranged vertically thereon and encloses the edge of the turntable (9), in the region between the transporting belt (1) and the operating station, at a small spacing therefrom.

10. The apparatus as claimed in claim 9, **characterized in that** the sliding surface (6) terminates at a chute (5), at the bottom end of which a receiving arrangement formed on the operating station may be positioned.

11. The apparatus as claimed in claim 10, **characterized in that** arranged at the end of the chute (5) is a restraining device for the article (G, G.O, G.1, G.2), this restraining device being actuable in time with the operating cycle and releasing the article as soon as the receiving arrangement corresponds with the chute (5).

## Revendications

1. Procédé d'amenée d'objets réguliers pourvus d'éléments d'accrochage (10) situés sur deux côtés opposés vers une station de travail, dans lequel les objets se suivant sont approchés, de manière contiguë les uns aux autres, sur une courroie de transport (1) mobile, individualisés les uns après les autres et amenés individuellement, à la cadence de travail, à la station de travail, **caractérisé en ce que** les objets (G, G.0, G.1, G.2) sont approchés avec leurs côtés opposés placés transversalement à la direction de transport et les éléments d'accrochage (10) emboîtés les uns dans les autres, **en ce que** l'individualisation s'effectue à la cadence de travail, sur la courroie de transport (1), en repoussant l'objet suivant (G.2) de manière à s'opposer à la pression d'accumulation générée par les objets (G) qui suivent, et **en ce que** l'objet individualisé (G.1) est ensuite emporté transversalement à la courroie de transport (1) et amené à la station de travail avec les bords opposés qui suivent une glissière de guidage.

2. Procédé selon la revendication 1, **caractérisé en ce que** l'individualisation s'effectue grâce à un mouvement de l'objet suivant (G.2), et donc des objets (G) qui le suivent, sur une distance nettement supérieure à la largeur de la projection des éléments d'accrochage, dans le sens opposé au sens de transport sur la courroie de transport (1).

3. Procédé selon la revendication 1, **caractérisé en ce que** les objets (G) sont poussés sur une surface de glissement (6) à l'extrémité de la courroie de transport (1) avant l'individualisation et sont emportés par celle-ci (6) ou sur celle-ci (6) après l'individualisation.

4. Procédé selon la revendication 1 ou 3, **caractérisé en ce que** l'enlèvement des objets individualisés s'effectue par un mouvement séparé sur une surface de glissement (6) contiguë à un plateau tournant (7) pourvu d'évidements (8) correspondants.

5. Procédé selon la revendication 1 ou 3, **caractérisé en ce que** les objets (G, G.0, G.1, G.2) arrivent automatiquement de la surface de glissement (6) dans la station de travail.

6. Dispositif pour l'exécution du procédé selon la revendication 1, comprenant une courroie de transport (1) pour approcher des objets (G, G.0, G.1, G.2), un dispositif d'individualisation (2) pour l'objet (G.1) se trouvant respectivement devant et un dispositif de réception (3) pour cet objet étant situés à l'extrémité de la courroie de transport, et comprenant un dispositif d'amenée (4) pour amener l'objet (G, G.0, G.1, G.2) vers une station de travail, **caractérisé en ce que** le dispositif d'individualisation est pourvu d'un moyen pour repousser un objet (G.2) à la cadence de travail sur la courroie de transport d'une manière s'opposant à la pression d'accumulation générée par les objets (G) qui suivent ; et **en ce que** le dispositif de réception (3) est pourvu d'au moins un logement (8.1, 8.2) pour un objet individualisé (G.1, G.2) qui est mobile dans le sens transversal à la courroie de transport à l'extrémité de cette dernière, le dispositif de réception (3) faisant en même temps partie du dispositif d'amenée (4).

7. Dispositif selon la revendication 6, **caractérisé en ce que** le dispositif d'individualisation (2) est pourvu de dispositifs de refoulement mécaniques (11) pour l'objet (G.2) venant respectivement en second, de préférence des poussoirs s'engageant par le bas dans le second objet.

8. Dispositif selon la revendication 7, **caractérisé en ce que** les dispositifs de refoulement (11) font partie d'un mécanisme à faible course ayant une composante de mouvement opposée au sens de transport des objets (G.2, G).

9. Dispositif selon la revendication 6 ou 8, **caractérisé en ce que** le dispositif de réception (3) est un plateau tournant (7) disposé au-dessus d'une surface de glissement fixe (6) et dont le bord comporte plusieurs évidements (8, 8.1, 8.2) équidistants en tant que logements recevant à chaque fois un objet (G, G.0, G.1, G.2), la surface de glissement (6) étant pourvue d'une paroi de guidage (9) qui lui est perpendiculaire et qui entoure le bord du plateau tournant (6) à une distance réduite dans la zone entre la courroie de transport (1) et la station de travail.

10. Dispositif selon la revendication 9, **caractérisé en ce que** la surface de glissement (6) se termine au niveau d'une goulotte (5) à l'extrémité inférieure de laquelle un dispositif de réception exécuté au niveau de la station de travail peut être positionné.

11. Dispositif selon la revendication 10, **caractérisé en ce qu'**un dispositif de retenue pour l'objet (G, G.0, G.1, G.2) pouvant être actionné à la cadence de travail est situé à l'extrémité de la goulotte (5), lequel dispositif libère l'objet dès que le dispositif de réception coïncide avec la goulotte (5).
